# EUROPEAN PATENT SPECIFICATION

(11) **EP 3 014 679 B1**
(45) Date of publication and mention of the grant of the patent: **17.01.2018**
(21) Application number: 14816628.3
(22) Date of filing: 24.06.2014
(51) Int. Cl.: H01M 4/134, H01M 4/38, H01M 10/052, H01M 4/1395, H01M 4/62, H01M 4/66, H01M 4/02, H01M 4/04

(54) **ROBUST AMORPHOUS SILICON ANODES, RECHARGABLE BATTERIES HAVING AMORPHOUS SILICON ANODES, AND ASSOCIATED METHODS**
ROBUSTE AMORPHE SILICIUMANODEN, WIEDERAUFLADBARE BATTERIEN MIT AMORPHEN SILICIUMANODEN UND ZUGEHÖRIGE VERFAHREN
ANODES DE SILICONE AMORPHES ROBUSTES, BATTERIES RECHARGEABLES COMPORTANT DES ANODES DE SILICIUM AMORPHE, ET PROCÉDÉS ASSOCIÉS

(30) Priority: 28.06.2013 US 201313931515
(43) Date of publication of application: 04.05.2016
(73) Proprietor: Intel Corporation, Santa Clara, CA 95054 (US)
(72) Inventor: CHEN, Zhaohui, San Jose, CA 95118 (US); GARDNER, Donald S., Los Altos, CA 94022 (US); MOON, Bum Ki, Gilroy, CA 95020 (US); LIU, Yang, Santa Clara, CA 95054 (US)
(74) Representative: HGF Limited
(86) International application number: PCT/US2014/043885
(87) International publication number: WO 2014/210015

(56) References cited:
- EP-A2- 2 219 250
- WO-A2-2004/025757
- KR-A- 20090 001 316
- KR-A- 20130 033 251
- US-A1- 2011 051 322
- US-A1- 2011 159 367
- US-A1- 2011 159 368
- US-A1- 2011 189 510

## Description

### RELATED APPLICATIONS

This application claims the benefit of U.S. Non- Provisional Patent Application Serial No. 13/931,515, filed June 28, 2013, with an attorney docket number P55087.

### TECHNICAL FIELD

Embodiments described herein relate generally to energy storage devices.

### BACKGROUND

Energy storage devices, including batteries and capacitors, are often used in various electronic devices. Batteries, for example, have a wide range of uses, particularly those capable of recharging. Currently, graphite is commonly used commercially as a material for anodes in rechargeable Li-ion batteries because of the reversible intercalation of Li-ions without significant volume (about 10%) and morphology change. The relatively low specific capacity of graphite (370 mA h/g) is its main drawback, however, which limits the capacity of Li-ion batteries. Silicon could be used as a promising replacement for carbon based anodes for various rechargeable batteries such as, for example, Li-ion batteries due to silicon's high theoretical specific capacity of about 4,200 mA h/g compared to other materials (for example, about 370mAh/g for a carbonaceous anode). In practice, a capacity of 2,000 mA h/g could be achieved if fully lithiated into the Li₂₂Si₅ phase (based on total mass including intercalated lithium). However, to date, silicon is being commercialized only as an enhancement additive for carbon based anodes. One barrier to full implementation of silicon based electrodes is the fact that Li-Si electrodes experience a high degree of pulverization and exfoliation during lithiation (observed volume expansion of up to about 400% depending on the phase of Li-Si alloy). The loss of the active material from silicon anode can be observed immediately in the first cycling. As a result, silicon anode technologies suffer significant capacity fading (up to only 20% remaining after first initial lithiation) and limited battery cycling. Moreover, the disintegration of active silicon material can potentially generate safety issues due to shorting in the battery.

WO 2004/025757 discloses electrodes comprising lithium alloyed with nanostructured silicon materials that exhibit improved capacities, cycle lives, and/or cycling rates compared with similar electrodes made from bulk silicon. The electrodes do not require a conductive diluent such as carbon black. These electrodes are useful as anodes for secondary electrochemical cells, for example, batteries and electro-chemical supercapacitors.

### SUMMARY

Aspects and embodiments of the invention are set out in the appended claims.

### BRIEF DESCRIPTION OF THE DRAWINGS

FIG. 1 is a schematic view of a section of an anode electrode in accordance with an invention embodiment;
FIG. 2 is a schematic view of a section of a structured surface of an amorphous silicon anode in accordance with another invention embodiment;
FIG. 3A is an SEM micrograph of amorphous silicon structures in accordance with another invention embodiment;
FIG. 3B is an SEM micrograph of amorphous silicon structures in accordance with another invention embodiment;
FIG. 3C is an SEM micrograph of amorphous silicon structures in accordance with another invention embodiment;
FIG. 3D is an SEM micrograph of amorphous silicon structures in accordance with another invention embodiment; and
FIG. 4 is a schematic view of a battery device in accordance with yet another invention embodiment.

### DESCRIPTION OF EMBODIMENTS

Although the following detailed description contains many specifics for the purpose of illustration, a person of ordinary skill in the art will appreciate that many variations and alterations to the following details can be made and are considered to be included herein.

Accordingly, the following embodiments are set forth without any loss of generality to, and without imposing limitations upon, any claims set forth. It is also to be understood that the terminology used herein is for the purpose of describing particular embodiments only, and is not intended to be limiting. Unless defined otherwise, all technical and scientific terms used herein have the same meaning as commonly understood by one of ordinary skill in the art to which this disclosure belongs.

As used in this specification and the appended claims, the singular forms "a," "an" and "the" include plural referents unless the context clearly dictates otherwise. Thus, for example, reference to "a layer" includes a plurality of such layers.

In this disclosure, "comprises," "comprising," "containing" and "having" and the like can have the meaning ascribed to them in U.S. Patent law and can mean "includes," "including," and the like, and are generally interpreted to be open ended terms. The terms "consisting of" or "consists of" are closed terms, and include only the components, structures, steps, or the like specifically listed in conjunction with such terms, as well as that which is in accordance with U.S. Patent law. "Consisting essentially of" or "consists essentially of" have the meaning generally ascribed to them by U.S. Patent law. In particular, such terms are generally closed terms, with the exception of allowing inclusion of additional items, materials, components, steps, or elements, that do not materially affect the basic and novel characteristics or function of the item(s) used in connection therewith. For example, trace elements present in a composition, but not affecting the compositions nature or characteristics would be permissible if present under the "consisting essentially of" language, even though not expressly recited in a list of items following such terminology. When using an open ended term, like "comprising" or "including," it is understood that direct support should be afforded also to "consisting essentially of" language as well as "consisting of" language as if stated explicitly.

"The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Similarly, if a method is described herein as comprising a series of steps, the order of such steps as presented herein is not necessarily the only order in which such steps may be performed, and certain of the stated steps may possibly be omitted and/or certain other steps not described herein may possibly be added to the method.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments described herein are, for example, capable of operation in other orientations than those illustrated or otherwise described herein. The term "coupled," as used herein, is defined as directly or indirectly connected in an electrical or nonelectrical manner. Objects described herein as being "adjacent to" each other may be in physical contact with each other, in close proximity to each other, or in the same general region or area as each other, as appropriate for the context in which the phrase is used. Occurrences of the phrase "in one embodiment," or "in one aspect," herein do not necessarily all refer to the same embodiment or aspect.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result. For example, a composition that is "substantially free of" particles would either completely lack particles, or so nearly completely lack particles that the effect would be the same as if it completely lacked particles. In other words, a composition that is "substantially free of" an ingredient or element may still actually contain such item as long as there is no measurable effect thereof.

As used herein, the term "about" is used to provide flexibility to a numerical range endpoint by providing that a given value may be "a little above" or "a little below" the endpoint.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "about 1 to about 5" should be interpreted to include not only the explicitly recited values of about 1 to about 5, but also include individual values and sub-ranges within the indicated range. Thus, included in this numerical range are individual values such as 2, 3, and 4 and sub-ranges such as from 1-3, from 2-4, and from 3-5, etc., as well as 1, 2, 3, 4, and 5, individually.

This same principle applies to ranges reciting only one numerical value as a minimum or a maximum. Furthermore, such an interpretation should apply regardless of the breadth of the range or the characteristics being described.

Reference throughout this specification to "an example" means that a particular feature, structure, or characteristic described in connection with the example is included in at least one embodiment. Thus, appearances of the phrases "in an example" in various places throughout this specification are not necessarily all referring to the same embodiment.

### Example Embodiments

An initial overview of technology embodiments is provided below and specific technology embodiments are then described in further detail. This initial summary is intended to aid readers in understanding the technology more quickly but is not intended to identify key or essential features of the technology, nor is it intended to limit the scope of the claimed subject matter.

Accordingly, it can be expected that an anode will experience less fracturing and better cycling performance from homogeneous pulverization/contraction with amorphous silicon materials. Although it can also be argued that a crystal silicon anode may turn into amorphous Li-Si and then convert into amorphous Si during lithiation and delithiation, it is suggested that the lithiation/delithiation of amorphous Si could result in lower stresses or a different stress state than in crystalline Si, and therefore, fracture might occur less readily in an initially amorphous structure. This could be partially explained by the fact that initially amorphous structures will only experience one phase change while the crystalline counterpart will undergo the movement of two phase (Si-Li and single Si) interfaces during first lithiation thus producing intensified tensile hoop stress to a fractured point. The disordered structure of amorphous silicon can also provide diffusion channels for the Li ions to transport quickly and homogeneously. Indeed, it has been suggested that amorphous silicon may have better performance in terms of cycling, capacity fading, and power density than the crystalline silicon counterpart.

Additionally, pulverization problems observed in amorphous silicon can be alleviated by tailoring the amorphous Si structure surface itself and engineering the anode into a nanostructure. By doing so, another challenge to the implementation of silicon anodes can be overcome, namely, an unstable solid electrolyte interface (SEI). The silicon surface itself is not generally chemically stable with most conventional electrolytes, and as a result, repetitive volume changes during cycling constantly move the interface between silicon and the electrolyte interface, thus hampering the formation of a stable SEI. In turn, the structure can continuously consume electrolyte and result in considerable capacity loss and low coulombic efficiency due to various side reactions.

Although amorphous silicon has increased mechanical strength as compared to single crystal or micro-polycrystalline, its amorphous structure remains unoptimized for battery applications. In addition, amorphous silicon currently being employed is in the form of a continuous film deposited on various substrates. As a result, the amorphous silicon exfoliates from significant expansion during lithiation.

It has been discovered, however, that amorphous silicon materials have increased mechanical stability when the material has at least one dimension that is less than a maximum thickness threshold. In one aspect, the maximum thickness threshold can be less than or equal to about 1 micron. In another aspect, the maximum thickness threshold can be less than or equal to about 500 nm. In yet another aspect, the maximum thickness threshold can be less than or equal to about 300 nm. In a further aspect, the maximum thickness threshold can be greater than about 1 nm thick. Amorphous structures that do not have at least one dimension less than the maximum thickness threshold have a greatly increased likelihood of fracturing and/or delaminating from the underlying substrate during lithiation and cycling. Furthermore, structures having at least one dimension that is less than or equal to 300 nm may be particularly stable to fracturing and/or delamination.

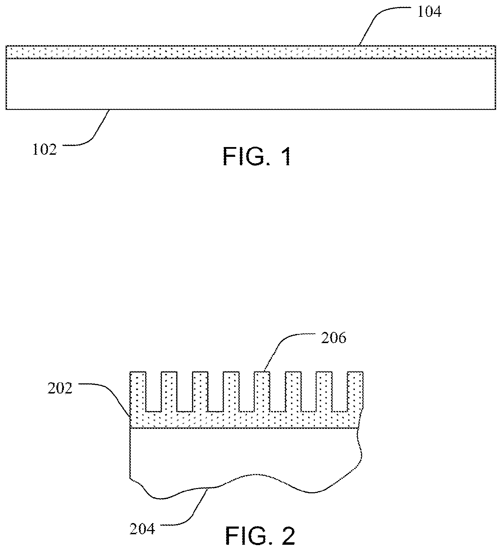

As is shown in FIG. 1, for example, in one aspect an anode device for a rechargeable battery having enhanced structural stability is provided. Such a device can include an electrically conductive substrate 102 and an electrode layer 104 deposited onto the electrically conductive substrate 102. The electrode layer 104 includes one or more amorphous silicon structures, where the amorphous silicon structure or structures have at least one dimension that is less than or equal to about 1 micron. In another aspect, the amorphous silicon structure or structures have at least one dimension that is less than or equal to about 500 nm. In yet another aspect, the amorphous silicon structure or structures have at least one dimension that is less than or equal to about 300 nm. In a further embodiment, the at least one dimension of the amorphous silicon structure or structures can be at least 1 nm thick.

A variety of types of amorphous silicon structures are contemplated, and as such, the dimensions of the structures can be highly variable, particularly given the potential variability of the positioning of the at least one dimension having a maximum thickness. It is important to note that, while in some aspects the electrode layer is oriented such that this "thickness limited dimension" is positioned to couple to the electrically conductive substrate, in other aspects the electrode layer is oriented such that the thickness limited dimension does not couple to the electrically conductive substrate. For example, an electrode layer may have amorphous silicon structures shaped as pillars that are oriented to extend perpendicularly relative to the surface of the electrically conductive substrate and have a diameter that is less than or equal to the thickness limited dimension. In this case, the thickness limited dimension is facing and thus oriented to couple to the electrically conductive substrate. As another example, an electrode layer may have an amorphous silicon structure that is a continuous layer formed on the electrically conductive substrate, where the thickness limited dimension is thickness of the continuous layer. In this case the thickness limited dimension is oriented perpendicularly to the electrically conductive substrate, and is not oriented to face the electrically conductive substrate. Similarly, structures having a thickness limited dimension that is a diameter may or may not contact the electrically conductive substrate along the thickness limited dimension. For example, a nanowire can be oriented such that the diameter of the wire is facing the electrically conductive substrate, or the nanowire can be oriented to lay upon the electrically conductive substrate with the diameter oriented perpendicularly to the substrate. As such, any orientation of amorphous silicon structures relative to the electrically conductive substrate is considered to be within the present scope.

The electrically conductive substrate can include any substrate material that is electrically conductive or that can be rendered electrically conductive. The electrically conductive substrate can include a variety of materials and can have a variety of physical dimensions and characteristic depending on the device design and the desire characteristics of such a device. Non-limiting examples of electrically conductive substrate materials can include semiconductors, metals, metal alloys, conductive polymers, and the like, including combinations thereof. Other specific non-limiting examples can include single crystalline silicon, polycrystalline silicone, amorphous silicon, carbon, and the like, including combinations thereof.

Additionally, in some aspects the electrically conductive substrate can be a flexible conductive material that can be utilized in a roll-to-roll process. In some cases, the electrically conductive substrate is sufficiently flexible to allow rolling onto itself. Furthermore, the electrically conductive substrate can be doped or alloyed with other elements for a variety of purposes, including varying rigidity, varying electrical conductivity, forming diffusion channels to enhance power performance, and the like. Non-limiting examples of doping or alloying elements can include C, H, Li, Ti, Ni, and the like, including appropriate combinations thereof.

Amorphous silicon can be applied to the electrically conductive substrate using any known technique. For example, the amorphous silicon can be deposited via CVD techniques, plasma torch spraying, spin-spraying, or any other suitable technique. In one aspect the amorphous silicon can be deposited in as a continuous film into or onto which the structured surface is created. In another aspect the amorphous silicon can be formed in such a way that the structured surface is created upon deposition. As such, deposition techniques can vary widely depending on the manufacturing design and the desired properties of the resulting material, and any such deposition technique can be used according to selected invention embodiments.

Amorphous silicon can additionally be created by depositing a precursor material and converting at least a portion of that material into amorphous silicon. For example, other forms of silicon, such as crystal silicon, can be deposited onto the electrically conductive substrate and subsequently converted into amorphous silicon. One non-limiting example of such a conversion process can be performed using a laser refluxing technique. For example, crystalline silicon can be irradiated with femtosecond laser pulses from a Yb-doped laser with a power of about 11W. Under such conditions, amorphous silicon is created from the crystalline starting material. The thickness of the resulting amorphous silicon layer can be controlled by varying laser poser and irradiation time. In another aspect, the amorphous silicon can be obtained by laser refluxing of single crystal substrate.

Additionally, dopants or alloying elements can be introduced into the amorphous silicon layer during or following deposition in order to vary the physical and/or electrical properties of the material. For example, various elements can be added to increase or otherwise modify the electrical conductivity of the amorphous silicon layer. In other aspects, various elements can be added to produce vacancies or pores in the amorphous silicon layer. Non-limiting examples of alloying elements can include C, H, Li, Ti, Ni, and the like, including combinations thereof. Furthermore, in some aspects portions of the amorphous silicon material can be passivated using a material having a better SEI performance using suitable techniques. One example of such a material is graphite. Other examples can include oxides, nitrides, and appropriate combinations thereof.

As has been described, the amorphous silicon material can include a variety of amorphous silicon structure shapes and sizes provided the amorphous silicon structure(s) have at least one dimension that is less than or equal to 1 micron. In one aspect, for example, the amorphous silicon layer can be a layer of amorphous silicon disposed onto the electrically conductive substrate, where the amorphous silicon layer has a thickness that is less than or equal to about 1 micron. In another aspect, the amorphous silicon layer has a thickness that is less than or equal to about 500 nm. In yet another aspect, the amorphous silicon layer has a thickness that is less than or equal to about 300 nm. In a further aspect, the at least one dimension of the amorphous silicon layer is at least 1 nm thick. Additionally, the amorphous silicon layer can be deposited as a continuous or discontinuous layer. The continuous layer can be continuous across substantially the entire surface of the electrically conductive substrate, a portion of the electrically conductive substrate, or multiple discrete portions of the electrically conductive substrate. On the other hand, the amorphous silicon layer can also be formed as a dis-continuous layer. A discontinuous layer is defined as a layer having discontinuities located within a deposited portion of the layer. Non-limiting examples of discontinuous layers include porous layers, sponge-like layers, and the like.

In another aspect, amorphous surface structures can be formed from an amorphous silicon material. Such surface structures can be formed using a variety of techniques, and any technique capable of forming such surface structures in amorphous silicon are considered to be within the present scope. Non-limiting examples can include wet chemical etches, dry chemical etches, laser ablation, screen printing, MEMs processing, lithography, and the like. Furthermore, the amorphous silicon structures can include any type of structure that is beneficial to the functionality or durability of the anode device. Non-limiting examples of such structures can include pillars, cones, tubes, trenches, pyramids, porous structures, sponge structures, nanowires, nanoparticle compacts, and the like, including combinations thereof. One example of an anode device having amorphous silicon structures is shown in FIG 2. In this case, an amorphous silicon material 202 is deposited onto an electrically conductive substrate 204. The amorphous silicon material 202 can include amorphous silicon structures 206 (i.e. surface features) that increase the surface area of the electrode.

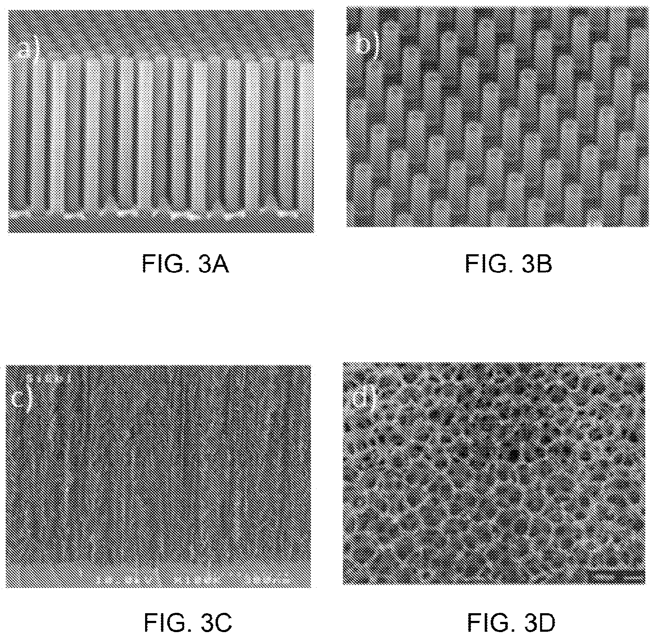

SEM images of example silicon structures are shown in FIGs. 3A-D. FIGs. 3A and B shows example of an array of pillar surface features and an array of tube surface features respectively, that can be patterned and etched from an amorphous silicon material. Such structures can be constructed with controlled spacing to allow for repetitive anode expansion/contraction with reduced incidence of fracturing. FIG. 3C shows an amorphous silicon material that can be formed, in at least one method, by anodizing a conductive amorphous silicon material to form a porous amorphous silicon material with a porosity and pore-size sufficient to accommodate anode expansion with reduced fracturing. FIG. 3D shows a robust amorphous silicon material formed into a sponge-like structure during processing or post processing treatment. Such a structure can be used to form a stable amorphous silicon anode with reduced fracturing in extended battery cycling or faster cycling as compared to conventional structures. One example method that may be utilized to manufacture such a structure includes self-assembly way such as so called bacteria-enabled silicon.

In addition to the formation techniques described, the process flows utilized to manufacture the present anode electrodes and electrode devices can also include additional steps, including damage removal etches, annealing steps for resurfacing, annealing steps for dopant activation, and the like.

In another aspect, the amorphous silicon structures can be a plurality of nanoparticles. Nanoparticles can be beneficial in that they have a high surface area and are readily formed into various larger structures. In some cases, the plurality of nanoparticles can be held together by an electrically conductive matrix. The electrically conductive matrix can be any conductive matrix material that allows the embedding and holding of nanoparticles therein. Non-limiting examples can include metals, metal alloys, electrically conductive polymer materials, graphitic materials, doped semiconductor materials and the like. Additionally, any technique for embedding the plurality of amorphous silicon nanoparticles into a conductive matrix layer is considered to be within the present scope. In one aspect, for example, embedding the plurality of amorphous silicon nanoparticles can further include applying the conductive matrix to the electrically conductive substrate and pressing the nanoparticles into the conductive matrix. In another aspect, embedding the plurality of amorphous silicon nanoparticles in the conductive matrix can include forming a mixture of the conductive matrix and the plurality of amorphous silicon nanoparticles and coupling the mixture with the conductive substrate. Electrochemical and electrophoresis techniques are well known, and as such, those skilled in the art can readily determine appropriate materials and deposition parameters for the deposition of the amorphous silicon nanoparticles into conductive matrix.

It is additionally contemplated that in some aspects the amorphous silicon structure(s) can be doped. Doping can be used to modify a mechanical and/or electrical property of the amorphous silicon. In one aspect, for example, the dopant can be a metal. Metal dopants can include elemental atoms or metal particles, and encompasses both pure metals and metal alloys. Specific non-limiting examples of dopants can include C, H, Li, Ti, Ni, and the like, including appropriate combinations thereof.

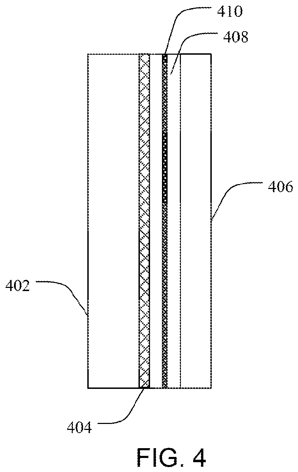

In another aspect, a rechargeable battery having enhanced recharging stability is provided. As is shown in FIG 4, for example, such a battery can have an anode including an electrically conductive substrate 402 and an electrode layer 404 deposited onto the electrically conductive substrate 402. The electrode layer 404 includes one or more amorphous silicon structures, where the amorphous silicon structure or structures have at least one dimension that is less than or equal to about 1 micron. The battery can further include a cathode 406 positioned to face the electrode layer 404 of the anode with sufficient separation to form an electrolyte space 408, and an electrolyte disposed in the electrolyte space 408. Furthermore, a separator 410 can be disposed in the electrolyte space 408, where the separator can be operable to electronically separate the anode and the cathode and to allow electrolyte ions to pass therethrough.

In another aspect, the amorphous silicon structure or structures have at least one dimension that is less than or equal to about 500 nm. In yet another aspect, the amorphous silicon structure or structures have at least one dimension that is less than or equal to about 300 nm. In a further aspect, the at least one dimension of the amorphous silicon structure or structures is at least 1 nm thick.

In yet another aspect, a method of minimizing exfoliation of an anode material of a rechargeable battery following repeated lithiation is provided. Such a method can include forming an electrode layer on a surface of an electrically conductive substrate, the electrode layer being comprised of one or more amorphous silicon structures, and the amorphous silicon structures having at least one dimension that is less than or equal to about 500 nm.

In one example, an anode device for a rechargeable battery having enhanced structural stability can include an electrically conductive substrate and an electrode layer deposited onto the substrate. The electrode layer can comprise one or more amorphous silicon structures. The amorphous silicon structures can have at least one dimension that is less than or equal to about 500 nm.

In one example, one or more amorphous silicon structures includes a member selected from the groups consisting of pillars, cones, tubes, trenches, pyramids, porous structures, sponge structures, continuous layers, nanowires, nanoparticle compacts, and combinations thereof.

In one example, one or more amorphous silicon structures are nanoparticles.

In one example, the nanoparticles are held together by an electrically conductive matrix.

In one example, the at least one dimension is less than or equal to about 300 nm.

In one example, the conductive substrate includes a member selected from the group consisting of semiconductors, metals, metal alloys, conductive polymers, and combinations thereof.

In one example, the conductive substrate includes a member selected from the group consisting of single crystalline silicon, polycrystalline silicon, amorphous silicon, other semiconductor material, carbon, and combinations thereof.

In one example, the conductive substrate is sufficiently flexible to allow rolling onto itself.

In one example, the one or more amorphous silicon structures further includes a dopant.

In one example, the dopant is a metal.

In one example, the dopant includes a member selected from the group consisting of C, H, Li, Ti, Ni, and combinations thereof.

In one example, a rechargeable battery having enhanced recharging stability, can include an anode as recited herein, a cathode positioned to face one or more amorphous silicon structures of the anode with sufficient separation to form an electrolyte space, an electrolyte disposed in the electrolyte space, and a separator disposed in the electrolyte space, the separator being operable to electronically separate the anode and the cathode and to allow electrolyte ions to pass therethrough.

In one example, a method of minimizing exfoliation of an anode material of a rechargeable battery following repeated lithiation, can comprise forming an electrode layer on a surface of an electrically conductive substrate. The electrode layer can be comprised of one or more amorphous silicon structures and the amorphous silicon structures having at least one dimension that is less than or equal to about 500 nm.

In one example, the at least one dimension of the one or more amorphous silicon structures is less than or equal to about 300 nm.

In one example, the one or more amorphous silicon structures includes a member selected from the groups consisting of pillars, cones, tubes, trenches, pyramids, porous structures, sponge structures, continuous layers, nanowires, nanoparticle compacts, and combinations thereof.

In one example, the one or more amorphous silicon structures are a plurality of amorphous silicon nanoparticles.

In one example, forming the electrode layer further includes embedding the plurality of amorphous silicon nanoparticles into a conductive matrix layer.

In one example, embedding the plurality of amorphous silicon nanoparticles further includes applying the conductive matrix to the electrically conductive substrate, and impregnating the nanoparticles into the conductive matrix.

In one example, forming the electrode layer further includes forming a mixture of the conductive matrix and the plurality of amorphous silicon nanoparticles, and coupling the mixture on the conductive substrate.

In one example, the amorphous silicon structures can be doped with a dopant.

In one example, the dopant can be a metal.

In one example, the dopant includes a member selected from the group consisting of C, H, Li, Ti, Ni, and combinations thereof.

In one example, forming the electrode layer further includes depositing an amorphous silicon layer on the conductive substrate and forming amorphous silicon structures from the amorphous silicon layer.

In one example, forming the electrode layer further includes depositing a crystalline silicon layer on the conductive substrate, and laser ablating a region of the crystalline silicon layer using femtosecond laser pulses to form the amorphous silicon layer having surface structures.

In one example, a portion of the electrode layer can be passivated.

In one example, the portion of the electrode layer is passivated with a material selected from the group consisting of graphite, nitrides, oxides, and combinations thereof.

While the forgoing examples are illustrative of the specific embodiments in one or more particular applications, it will be apparent to those of ordinary skill in the art that numerous modifications in form, usage and details of implementation can be made without departing from the principles and concepts articulated herein. Accordingly, no limitation is intended except as by the claims set forth below.

## Claims

1. An anode device for a rechargeable battery having enhanced structural stability, comprising:
an electrically conductive substrate (204);
an electrode layer (202) deposited onto the substrate (204), the electrode layer (202) comprised of one or more porous amorphous silicon structures (206), the porous amorphous silicon structures (206) having at least one dimension that is less than or equal to about 500 nm.

2. The device of claim 1, wherein the one or more porous amorphous silicon structures (206) includes a member selected from the groups consisting of pillars, cones, tubes, trenches, pyramids, sponge structures, continuous layers, nanowires, and combinations thereof.

3. The device of claim 1, wherein the one or more porous amorphous silicon structures (206) are nanoparticles.

4. The device of claim 3, wherein the nanoparticles are held together by an electrically conductive matrix.

5. The device of claim 1, wherein the at least one dimension is less than or equal to about 300 nm.

6. The device of claim 1, wherein the conductive substrate (204) includes a member selected from the group consisting of semiconductors, metals, metal alloys, conductive polymers, and combinations thereof.

7. The device of claim 1, wherein the conductive substrate (204) includes a member selected from the group consisting of single crystalline silicon, polycrystalline silicon, amorphous silicon, other semiconductor material, carbon, and combinations thereof.

8. The device of claim 1, wherein the conductive substrate (204) is a flexible conductive material, and wherein the flexible conductive material is sufficiently flexible to allow rolling onto itself.

9. The device of claim 1, wherein the one or more porous amorphous silicon structures (206) further includes a dopant.

10. The device of claim 9, wherein the dopant is a metal.

11. The device of claim 9, wherein the dopant includes a member selected from the group consisting of C, H, Li, Ti, Ni, and combinations thereof.

12. A rechargeable battery having enhanced recharging stability, comprising:
an anode (402, 404) of claim 1:
a cathode (406) positioned to face the one or more amorphous silicon structures (206) of the anode (402, 404) with sufficient separation to form an electrolyte space (408);
an electrolyte disposed in the electrolyte space (408); and
a separator (410) disposed in the electrolyte space (408), the separator (410) being operable to electronically separate the anode (402, 404) and the cathode (406) and to allow electrolyte ions to pass there through.

## Patentansprüche

1. Anodenvorrichtung für eine wiederaufladbare Batterie mit verbesserter Strukturstabilität, umfassend:
ein elektrisch leitfähiges Substrat (204);
eine auf das Substrat (204) aufgebrachte Elektrodenschicht (202), wobei die Elektrodenschicht (202) aus einer oder mehreren porösen amorphen Siliciumstrukturen (206) besteht, wobei die porösen amorphen Siliciumstrukturen (206) wenigstens eine Abmessung aufweisen, die kleiner als oder gleich etwa 500 nm ist.

2. Vorrichtung gemäß Anspruch 1, wobei die eine oder mehreren porösen amorphen Siliciumstrukturen (206) ein Element ausgewählt aus den Gruppen bestehend aus Säulen, Kegeln, Rohren, Gräben, Pyramiden, Schwammstrukturen, kontinuierlichen Schichten, Nanodrähten und Kombinationen davon umfasst.

3. Vorrichtung gemäß Anspruch 1, wobei die die eine oder mehreren porösen amorphen Siliciumstrukturen (206) Nanopartikel sind.

4. Vorrichtung gemäß Anspruch 3, wobei die Nanopartikel durch eine elektrisch leitfähige Matrix zusammengehalten werden.

5. Vorrichtung gemäß Anspruch 1, wobei die wenigstens eine Abmessung kleiner als oder gleich etwa 300 nm ist.

6. Vorrichtung gemäß Anspruch 1, wobei das leitfähige Substrat (204) ein Element ausgewählt aus der Gruppe bestehend aus Halbleitern, Metallen, Metalllegierungen, leitfähigen Polymeren und Kombinationen davon umfasst.

7. Vorrichtung gemäß Anspruch 1, wobei das leitfähige Substrat (204) ein Element ausgewählt aus der Gruppe bestehend aus einkristallinem Silicium, polykristallinem Silicium, amorphem Silicium, einem anderen Halbleitermaterial, Kohlenstoff und Kombinationen davon umfasst.

8. Vorrichtung gemäß Anspruch 1, wobei das leitfähige Substrat (204) ein flexibles leitfähiges Material ist und wobei das flexible leitfähige Material ausreichend flexibel ist, um Aufrollen auf sich selbst zu erlauben.

9. Vorrichtung gemäß Anspruch 1, wobei die eine oder mehreren porösen amorphen Siliciumstrukturen (206) ferner einen Dotierstoff enthalten.

10. Vorrichtung gemäß Anspruch 9, wobei der Dotierstoff ein Metall ist.

11. Vorrichtung gemäß Anspruch 9, wobei der Dotierstoff ein Element ausgewählt aus der Gruppe bestehend aus C, H, Li, Ti, Ni und Kombinationen davon enthält.

12. Wiederaufladbare Batterie mit verbesserter Wiederaufladungsstabilität, umfassend:
eine Anode (402, 404) gemäß Anspruch 1;
eine Kathode (406), die der einen oder den mehreren amorphen Siliciumstrukturen (206) der Anode (402, 404) zugewandt angeordnet ist, mit einem ausreichenden Abstand, um einen Elektrolytraum (408) zu bilden;
einen in dem Elektrolytraum (408) angeordneten Elektrolyten; und
ein Trennelement (410), das in dem Elektrolytraum (408) angeordnet ist, wobei das Trennelement (410) funktionsfähig ist, die Anode (402, 404) und die Kathode (406) elektronisch zu trennen und zu erlauben, dass Elektrolyt-Ionen hindurchtreten.

## Revendications

1. Dispositif anodique pour une batterie rechargeable ayant une stabilité structurale améliorée, comprenant :
un substrat électriquement conducteur (204) ;
une couche d'électrode (202) déposée sur le substrat (204), la couche d'électrode (202) constituée d'une ou plusieurs structures en silicium amorphe poreux (206), les structures en silicium amorphe poreux (206) ayant au moins une dimension qui est inférieure ou égale à environ 500 nm.

2. Dispositif de la revendication 1, dans lequel la ou les structures en silicium amorphe poreux (206) comportent un élément choisi dans les groupes constitués par les piliers, les cônes, les tubes, les tranchées, les pyramides, les structures spongieuses, les couches continues, les nanofils, et les combinaisons de ceux-ci.

3. Dispositif de la revendication 1, dans lequel la ou les structures en silicium amorphe poreux (206) sont des nanoparticules.

4. Dispositif de la revendication 3, dans lequel les nanoparticules sont maintenues ensemble par une matrice électriquement conductrice.

5. Dispositif de la revendication 1, dans lequel l'au moins une dimension est inférieure ou égale à environ 300 nm.

6. Dispositif de la revendication 1, dans lequel le substrat conducteur (204) comporte un élément choisi dans le groupe constitué par les semi-conducteurs, les métaux, les alliages métalliques, les polymères conducteurs, et les combinaisons de ceux-ci.

7. Dispositif de la revendication 1, dans lequel le substrat conducteur (204) comporte un élément choisi dans le groupe constitué par le silicium monocristallin, le silicium polycristallin, le silicium amorphe, un autre matériau semi-conducteur, le carbone, et les combinaisons de ceux-ci.

8. Dispositif de la revendication 1, dans lequel le substrat conducteur (204) est un matériau conducteur souple, et dans lequel le matériau conducteur souple est suffisamment souple pour pouvoir être roulé sur lui-même.

9. Dispositif de la revendication 1, dans lequel la ou les structures en silicium amorphe poreux (206) comportent en outre un dopant.

10. Dispositif de la revendication 9, dans lequel le dopant est un métal.

11. Dispositif de la revendication 9, dans lequel le dopant comporte un élément choisi dans le groupe constitué par C, H, Li, Ti, Ni, et les combinaisons de ceux-ci.

12. Batterie rechargeable ayant une stabilité améliorée en recharge, comprenant :
une anode (402, 404) de la revendication 1 ;
une cathode (406) positionnée pour faire face à la ou aux structures en silicium amorphe (206) de l'anode (402, 404) avec une séparation suffisante pour former un espace électrolytique (408) ;
un électrolyte disposé dans l'espace électrolytique (408) ; et
un séparateur (410) disposé dans l'espace électrolytique (408), le séparateur (410) étant utilisable pour séparer électroniquement l'anode (402, 404) et la cathode (406) et pour laisser passer des ions électrolytiques.
